# EUROPEAN PATENT APPLICATION

(11) **EP 4 447 047 A1**
(43) Date of publication of application: **16.10.2024**
(21) Application number: 24167428.2
(22) Date of filing: 28.03.2024
(51) Int. Cl.: G11B 27/031, G11B 27/10

(54) **SYSTEM AND METHOD FOR AI/XI BASED AUTOMATIC SONG FINDING AND ADAPTATION FOR VIDEOS**

(30) Priority: 28.03.2023 US 202363455070 P
(71) Applicant: Bellevue Investments GmbH & Co. KGaA, 10589 Berlin (DE)
(72) Inventor: Rein, Dieter, 10589 Berlin (DE); Jaron, Jürgen, 10589 Berlin (DE)

(57) **Abstract**

A method is presented, of adapting a determined best fitting song from a large audio database, for a selected video production. The intrinsic audio of the video material is analyzed for sections containing speech content and a determined best fitting song is adapted in these determined sections. The content of the songs utilized, has been tagged by emotion tags describing the energy, the emotion of these songs over time, meaning that each song can contain a plurality of, even overlapping, emotions. The song's volume is adjusted downward during intervals when speech is present in the intrinsic audio.

## Description

### CROSS REFERENCE TO RELATED APPLICATIONS

This application claims the benefit of U.S. Provisional Patent Application serial number 63/287,646 filed on 12/09/2021 and U.S. Provisional Patent Application serial number 63/320,730 filed on 03/17/2022 and U.S. Patent Application serial number 18/078,329 filed on 12/09/2022 and incorporates said provisional applications and said Patent application by reference into this document as if fully set out at this point.

### TECHNICAL FIELD

The instant invention relates generally to processing video works and, more particularly, to methods of automatically matching songs to video material by using AI (artificial intelligence) and XI (expert intelligence/systems) analysis and tagging of video material and automatic determination of fitting songs from an audio database.

### BACKGROUND

The audio and video editing and generation process and working space underwent a multitude of developments and evolutions over at least the last thirty or forty years. Early on the user was happy to be able to generate a minute of music that sounded somewhat like a piano. Now the user is able to generate music resembling entire orchestras if so desired.

The same can be said of video creation and editing. The first video recordings took the form of small tapes produced by large portable cameras, whose data had to be transferred in a cumbersome way to a personal computer for subsequent processing. Tape-based video that had been transferred to computer could be viewed by the user and possibly subjected to some minimal editing of the content. However, the main use for the video after transfer was to provide the user an opportunity to watch the content. Now the user can obtain video with a variety of common devices, e.g., telephones, digital cameras, dedicated records, etc. However, there has been a steady migration toward the use of smart phones to record video since the video can be viewed immediately after it has been acquired and easily shared with others without loading onto a desktop computer. Further, smart phones have storage for a large number of videos and this further encourages the user to freely record activities and events that the user wants to preserve.

Over the last years the sheer amount of video and audio material available to both the professional and the amateur user has reached almost unimaginable levels, levels so extreme that it makes it difficult for a user to maintain an inventory of a video collection so that relevant records can be recalled and used when that is desired. This problem is especially acute in the case of video producers who are searching for the best song to match to a particular video. They may spend an inordinate amount of time selecting, checking and determining what kind of music would best fit a particular video recording, only to find that they have picked a song that either fits the video content only for a particular section of the video, e.g., one that the producer values higher than the other sections, or it is too short or too long for the video in question.

Thus, what is needed is a system and method for automatically selecting the best fitting audio material from a large music archive for integration into video productions.

Heretofore, as is well known in the media editing industry, there has been a need for an invention to address and solve the above-described problems. Accordingly, it should now be recognized, as was recognized by the present inventors, that there exists, and has existed for some time, a very real need for a system and method that would address and solve the above-described problems.

Before proceeding to a description of the present invention, however, it should be noted and remembered that the description of the invention which follows, together with the accompanying drawings, should not be construed as limiting the invention to the examples (or embodiments) shown and described. This is so because those skilled in the art to which the invention pertains will be able to devise other forms of this invention within the ambit of the appended claims.

### SUMMARY OF THE INVENTION

According to a first embodiment, disclosed herein is a method of finding the best fitting song from a large audio database to match a selected video production in a mobile environment. The songs in the audio database will have been tagged by emotion tags that describe the energy and the emotion of these songs, potentially also as the energy and emotion vary over time. That is, each song could potentially exhibit a number of different, even overlapping, emotions. These time-varying emotion tags or labels (the terms have the same meaning and will be used interchangeably herein) will have been associated with each music item in the database by manual curating by a so-called expert engine, which means that an expert in audio and video editing will have been tasked with the responsibility of screening the song material in the database for use by the artificial intelligence step in fitting songs to a given video work.

Each video for which the user would like to get one or more song suggestions or song selections has to be been analyzed by existing well known cloud-based AI services to determine scenes and segments in the video. Those of ordinary skill in the art will understand that segment analysis applies to a broad range of techniques that identify elements in the video and assigns those elements and their associated pixels with an object. The AI-identified scenes, segments, and objects are assigned labels pertinent to their identity, e.g., tags that might be used include people, faces, actions (dancing, skiing, hiking, climbing, swimming, diving) or monuments, sights and much more. Some embodiments might use edge-based segmentation, threshold-based segmentation, region-based segmentation, cluster-based segmentation, watershed segmentation, or some combination of the foregoing. The instant invention utilizes an emotion matrix to establish a connection between these detected AI generated video labels and the emotions of the song.

Utilizing the emotion matrix, the instant invention will then initiate a multi-step filter process in the song database to find the best fitting song. According to an embodiment, the instant invention will determine the main emotion of the video and utilize that information in a song filter step. This might be done in connection with the search for a particular music genre. Additionally, the instant invention will also determine and select songs that fit the length of the video and optionally calculate a soft fade out at the end of the song at the exact video ending position to make a combination of a selected song with a video smoother or even possible. In a preferred embodiment the user is provided with at least three songs as a result of that multi-step filter process.

Videos can be analyzed e.g., by using existing cloud-based AI services to find scenes and segments in the video and tag labels for recognized objects in the video, such as people, faces, actions (dancing, skiing, hiking, climbing, swimming, diving...) and much more.

One embodiment of the invention uses a special "emotion matrix" to connect these video labels with the emotions of the songs.

For each usable video tag, the following information will preferably be obtained by manually curating the video:
- usage: indicates if the label can be used for music selection or not,
- energy level: indicates whether the label stands for low, medium, or high musical energy,
- emotion tags: represent the emotional content of a song, e.g., calm, energetic, aggressive, happy, romantic, dramatic, etc. Songs will be selected from the data based on this tag or not if the emotion is determined to not be relevant to the video work that is being processed.

The following steps are principal steps that are used to process a video for the automated music selection in a mobile environment:
- Select an input video on a mobile device.
- Generate a specific number of single equidistant frames from the video.
- Extract the generated number of frames from the input video
- Compress extracted frames.
- Upload the extracted and compressed frames to a cloud-based video analysis tool.
- Detect labels for all extracted frames using cloud-based video analysis tool.
- Utilize "Emotion Matrix" to find corresponding emotions for each label.
- Sort all detected labels according to the number of detections.
- Select the first five useful labels out of the sorted labels.
- Determine emotions and energy level of the input video using info on five first labels.
- Determine genre of the input video - define main genre based on emotions or user input.
- Map the energy level of the input video to energy tags-
- Apply filtering to song database
   ∘ Emotion filter - filter out songs that do not have the detected emotions in the mood tag of the songs.
   ∘ Genre filter - filter out the songs that do not have the genre in the genre tag of the songs.
   ∘ Energy filter - filter out the songs that do not have the energy labels in the energy tag of the songs.
   ∘ Vocal filter - filter out the songs that contain vocal loops.
   ∘ Quality filter - filter out the songs that do not pass a quality threshold score.
- Stop filter process if number of determined songs is less than 5.
- Sort the determined songs according to the number of similarities between the song tags (mood, energy, genre) and the input video info (emotion, energy level, genre).

The approach automatically finds the best fitting song from a database for a given video by implementing the following steps:
- All songs in the database are tagged with genres, moods/emotion, etc. For example, the song tags might include pop, electronic, cinematic etc., and the emotion tags might include beautiful, happy, relaxing, etc.
- Certain labels that are meaningful for the song finding process are marked positive for further usage, e.g., Adventure, Aerial view, Architecture, etc.
- All the labels in the video are sorted by their occurrence in the video and the dominant labels are marked.
- These marked dominant labels are translated into emotions using an "emotion matrix table", based on expert knowledge (XI).
- Additionally, an energy level between 1 and 3 is determined for each of these labels.
- Based on emotions and energy levels for the dominant labels a multi-step filtering process is now performed in the song database to find the best fitting song:
   i. Select the emotions and filter these songs by the emotions.
   ii. Select a genre based on the emotions and filter all songs with that genre.
   iii. Select an energy level and filter all songs that do not have any of the energy level labels.
   iv. Calculate the length of the video and find the best fitting songs in the result list.
   v. Optionally, calculate a soft fade out at the end of the song at the exact video ending position.
   vi. Optionally, offer the user the best 3 songs from this filtering process and let him choose the most preferred.

In another specific embodiment the instant invention utilizes a developed special AI voice detection algorithm that is being carried out on the audio track of the initial video track. In this embodiment the audio track of the video is uploaded to a specific server, where the voice detection algorithm is being run on the audio track to detect all ranges of voice in the video. The detected sections are then marked as speech passages and stored for further use by the instant invention.

The marked sections are then adapted by the instant invention according to two potential approaches. In the first approach the energy level of all these passages is set to "low energy". In this way the background music is less complex and of lower volume in this particular passages. In a second approach the volume of the song in the marked passages is reduced by a certain level, e.g. -10 dB when preparing the determined song for selection as background song for the selected video. In this particular approach the original audio volume of the selected song could be faded down to its adapted volume level one second before the beginning of each speech passage and faded up one second after the end of each speech passage. This might be implemented to avoid volume jumps and to keep the original speech passages intact so that it can be understood by the user.

If the song in the database is stored in an editable project format, the energy levels for each video scene can be used to adapt the musical energy according to the energy level of the video scene, using any of the algorithms set out above or disclosed in Patent Application Serial numbers 17/139,169, 17/143,708, and 17/131,838, the disclosures of which are incorporated herein by reference as if fully set out at this point. In this approach, the selected song will be adapted dynamically to different video scenes, e.g., action ski ride scene, lunch meeting with friends and a romantic sunset scene.

An approach for automated selection and adaptation of songs for video production using AI video analysis methods has been disclosed. It is clear that such would be a great help for any video producer who is attempting to fit a video work with complementary audio material that is drawn from a large database. In this sort of database, the audio material would usually be tagged by emotions, e.g., calm, energetic, aggressive, happy, romantic, dramatic etc.

It should be clear that an approach such as this would be a tremendous aid to the user and would additionally provide assistance in the development and the creation of professional soundtracks for user selected video material. The often-frustrating process of finding and generating music material that is fitting in dynamic and impact to a particular video and its sequences is replaced with an automatic process that provides the user with at least three versions of songs that in emotion and impact match the same in a video. Therefore, this approach delivers functionality to the user of music and audio editing software which enables the user to swiftly being provided with different songs for a selected video without the need to individually pick, check and select each song.

The foregoing has outlined in broad terms some of the more important features of the invention disclosed herein so that the detailed description that follows may be more clearly understood, and so that the contribution of the instant inventors to the art may be better appreciated. The instant invention is not to be limited in its application to the details of the construction and to the arrangements of the components set forth in the following description or illustrated in the drawings. Rather, the invention is capable of other embodiments and of being practiced and carried out in various other ways not specifically enumerated herein. Finally, it should be understood that the phraseology and terminology employed herein are for the purpose of description and should not be regarded as limiting, unless the specification specifically so limits the invention.

### BRIEF DESCRIPTION OF THE DRAWINGS

These and further aspects of the invention are described in detail in the following examples and accompanying drawings.
Fig. **1** is an illustration of a working environment of the instant invention according to an embodiment.
Fig. **2** depicts the main parts and the interaction therewith according to an embodiment of the instant invention.
Fig. **3** illustrates the process of video material analysis of the instant invention.
Fig. **4** depicts the emotion matrix and the associated data therewith.
Fig. **5** illustrates the steps of the expert engine when examining the video tags according to an embodiment of the instant invention.
Fig. **6** depicts the workflow of the instant invention when determining the best fitting song.
Fig. **7** illustrates another embodiment of the instant invention of integrating the video analysis data into the emotion matrix.
Fig. **8** depicts the song finding algorithm according to an embodiment of the instant invention.
Fig. **9** illustrates a more elaborate approach to finding the best fitting song according to one embodiment of the instant invention.
Fig. **10** depicts a search parameter expansion according to an embodiment of the instant invention integrating cuts per minute data values into the search.
Fig.**11** illustrates a portion of an emotion matrix of the sort calculated and used herein.
Fig.**12** depicts a song adaptation algorithm according to an embodiment of the instant invention.
Fig. **13** illustrates an overview of the media processing steps according to an embodiment of the instant invention.
Fig. **14** depicts a further description of the settings for media process according to an embodiment of the instant invention.
Fig.**15** illustrates the processing approach of an AI analysis server utilized by the instant invention.
Fig.**16** depicts a workflow of the low energy adaptation of a particular section of a song according to an embodiment of the instant invention.

### DETAILED DESCRIPTION

While this invention is susceptible of embodiment in many different forms, there is shown in the drawings, and will be described hereinafter in detail, some specific embodiments of the instant invention. It should be understood, however, that the present disclosure is to be considered an exemplification of the principles of the invention and is not intended to limit the invention to the specific embodiments or algorithms so described.

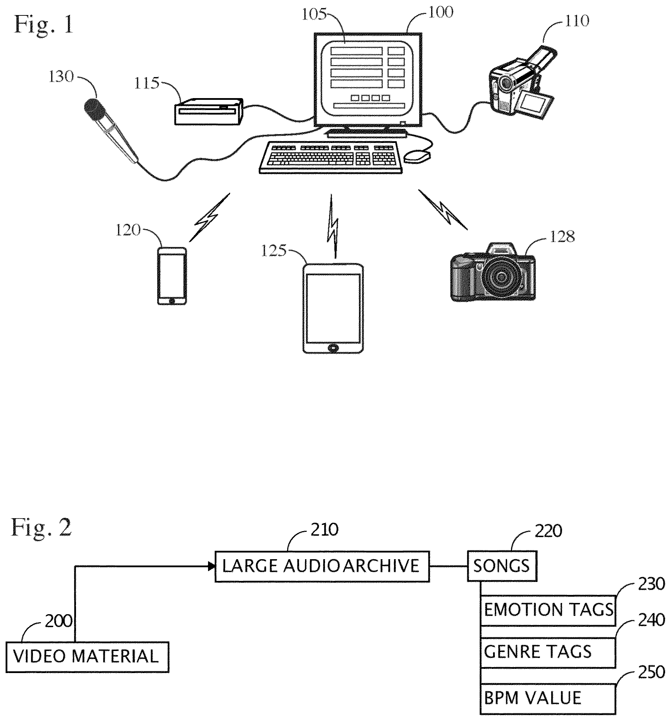

As is generally indicated in Fig. **1****,** at least a portion of the instant invention will be implemented in form of software **105** running on a user's computer **100** or other device with a CPU such as a tablet computer, smart phone, etc. For purposes of the instant disclosure, the word "computer" or CPU will be used generically to refer to any programmable device such as those listed in the previous sentence. Such a computer will have some amount of program memory and storage (whether internal or accessible via a network) as is conventionally utilized by such units. Additionally, it is possible that an external camera **110** of some sort will be utilized with - and will preferably be connectible to the computer so that video and/or graphic information can be transferred to and from the computer. Preferably the camera **110** will be a digital video camera, although that is not a requirement, as it is contemplated that the user might wish to utilize still images from a digital still camera in the creation of his or her multimedia work. Further given the modern trend toward incorporation of cameras into other electronic components (e.g., in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally, a microphone **130** might be utilized so that the user can add voice-over narration to a multimedia work and a digital media burning device **115** could be useful for storing in-progress or completed works. Further, it might also be possible and is shown in Fig. **1** that the process of the instant invention might be implemented on portable tablet computer devices **125** or on mobile devices, such as smart phones **120.**

Turning next to Fig. **2****,** this figure illustrates some of the main aspects of an embodiment and their interactions. The user, whether amateur, semi-pro or professional, provides video material **200** to the instant invention with the goal of finding the best fitting song to this video material. Note that song, as that term is used herein, should be broadly construed as audio content and may include short or long music recordings of any type including audio recordings that may or may not be traditional songs with lyrics that are meant to be sung. Finding a "best fitting song" in terms of feel, of energy, of emotions, etc. has traditionally not really been quantifiable by any approach. However, with the instant invention this is made possible.

The availability of a large audio database, or large audio archive **210** is required. In the database will be stored a plurality of individual songs **220** that have been classified according to their content, e.g., they will have accompanying emotion tags **230**, a genre tag **240** and at least a bpm value **250.** At least the emotion tags and the genre tag/tags will likely have been associated with the song by manual curating using a so-called expert system. An expert system in the current context might refer to an individual or individuals who manually curate the collection of audio material or it could be a software-based automated identification system that determines at least the emotion and genre of the music works, the latter of which is rapidly becoming more widely available and is beginning to exhibit capabilities that can potentially match or even exceed manual curation.

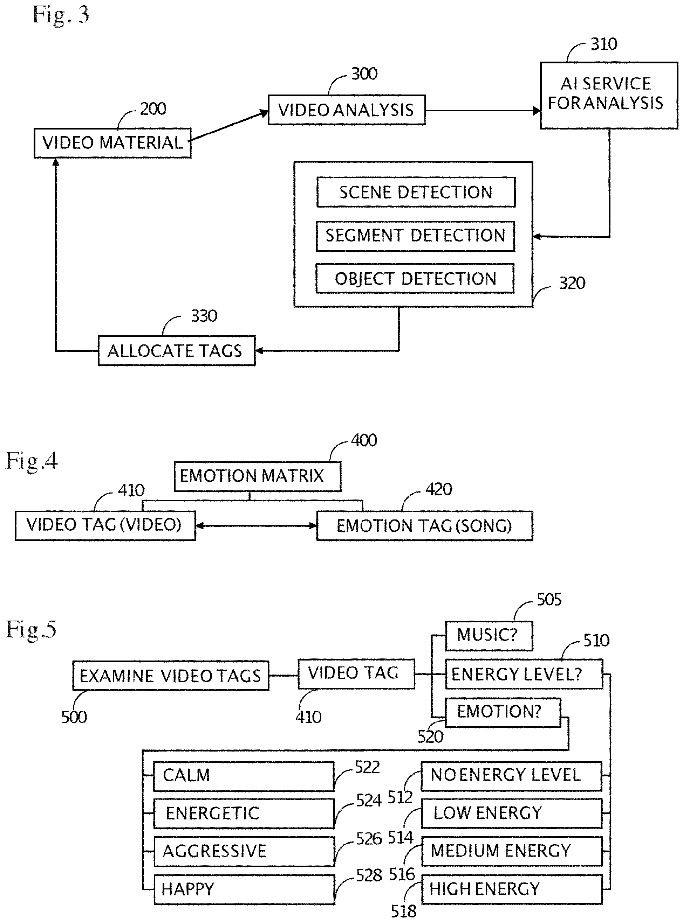

Coming next to Fig. **3**, this figure discloses the preferred processes associated with preparing the video material **200** for use with the instant invention. The video material is preferably initially subjected to a video content analysis **300**, which is most preferably performed by an AI service **310.** There are a number of such services available that allow a user to upload a video **200** to an online platform and that will automatically analyze the video using an AI content analysis system **310.** These systems are designed to at least determine scenes, segments and objects **320** in the video and additionally, and most importantly, provide a number of tags **330** that report the results of the analysis and are then associated with the analyzed video material **200.**

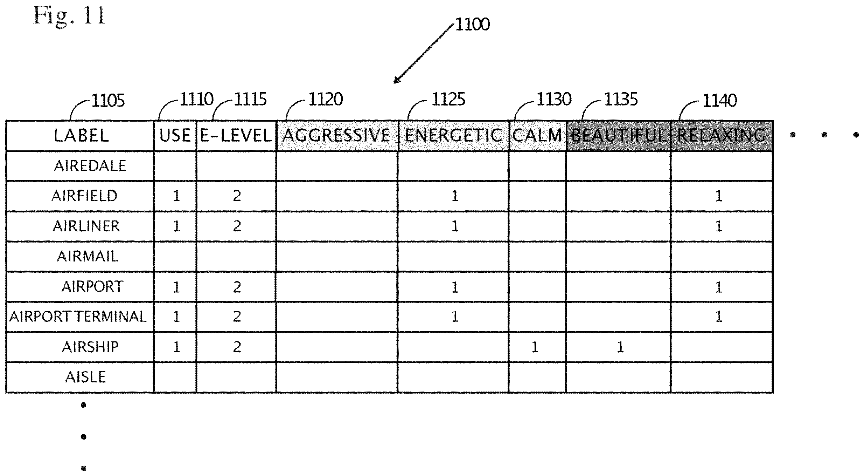

Fig. **4** depicts a conceptual illustration of an emotion matrix **400** and some important associated data parts. This figure illustrates that there is intended to be a connection between the video tag s**410** and emotion tags **420.** The emotion matrix **400** uses this connection in choosing songs that match the video activity. This concept is explained in detail below in connection with Fig. 11.

Turning next to Fig. **5**, this figure illustrates the steps an expert engine might take when examining the video tags according to one embodiment of the instant invention. In a first preferred step, the video tags are accessed and read by the instant invention **500.** This step is preferably initiated immediately after the video has been submitted to and analyzed by one of the cloud-based AI services described previously. Each video tag **410** is then screened according to at least three different criteria. First, the tag is examined to determine if it is related to music or not (i.e., box **505**). Then the energy level of the video segment **510** is read. This tag will indicate whether the video segment has been assigned to the "no" **512**, "low" **514**, "medium" **516** or "high" **518** energy level **510** category. These tags indicate whether the associated segment requires music (or not) and the energy level of the music that is most likely to match the on-screen action, i.e., low, medium, or high. The third criterion is related to whether or not the video can be described as relating to a particular emotion **520.**

For example, a label/tag like "license plate" could be associated with any emotion, e.g., calm **522**, energetic **524**, aggressive **526** or happy **528.** Suppose as an alternative that the label/tag is "library". This suggests that the associated emotion would be more likely to be something like "calm", or at least a less energetic the label/tag "license plate". Thus, the emotion "calm" might be associated with the label/tag "library". Of course, in practice there might be many hundreds or thousands of different tags that could potentially be used to describe the video content and the two examples given here are not intended to be limiting in any way on the sorts of tags that might returned by the AI service.

In the same way, the process of Fig. **5** goes through the entire list resulting from the video analysis and builds an emotion matrix containing each label that it is necessary to have an emotion associated therewith. It should also be noted that the listing of the emotions in this figure are only given as nonlimiting examples of the number of entries that might be available in the emotions lexicon. The listing of emotions in Fig. 5 has been limited to improve the readability of the application and is not intended to limit the disclosure in any form.

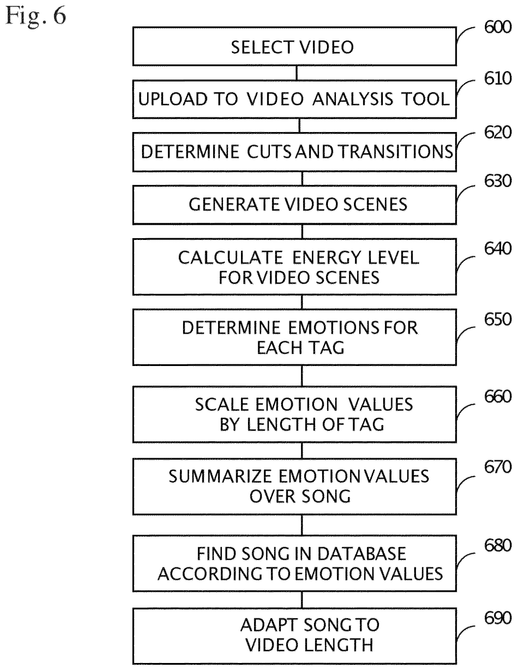

Turning next to Fig. **6**, this figure discloses one preferred embodiment of a workflow the instant invention might use when determining the best fitting song. In a first preferred step, the user selects the video **600** for which he or she would like to get a suggestion of at least one matching song, wherein "matching" should be understood to mean a song that during its runtime is at least somewhat compatible on a musical level with the activities in the video. As a next preferred step, the user uploads the video to a selected cloud-based video analysis tool **610.** However, the tool might also be running on a standard desktop computer or it could be a mixed approach with the calculations divided between the desktop and cloud. The user will preferably be provided with a number of selectable AI-related analysis tool options from which to choose, e.g., whether or not facial recognition should be performed, whether the submission is to be used in connection with training the AI, whether OCR is to be employed, whether semantic analysis should be undertaken, whether speech-to-text should be included, the depth of the analysis (e.g., tagging "automobile" vs "Chevrolet^{®} Silverado^{®} pickup"), etc.

After the upload is finished and the video analysis tool has delivered the results of the content analysis, the tags describing the content of the video material will be used by the instant invention to determine cuts and transitions in the video material **620.** This will preferably be implemented by a video segmentation API that is typically made available as part of the cloud-based video analysis tool, or it might also be possible that this will be initiated by a single API.

As a next preferred step, the instant invention will identify video scenes **630.** These scenes will be generated by analysis of the cut and transition detections. Each detected cut and transition point will be examined and, depending on the associated labels, the instant invention may combine consecutive cuts into video scenes if the labels of these cut and transition points are similar or logically related. For example, if three consecutive scenes were tagged ski, snow and downhill, sport or race, respectively, the instant invention will assume that a ski race "scene" is being shown in the consecutive sections.

In a next preferred step, the instant invention will calculate or determine the energy level **640** of each just generated scene. As has been discussed previously, each assigned tag will have been previously curated by the expert system and assigned at least one energy level value The energy level value is selected for each section that is part of a scene and the system will then calculate a representative energy level value for each determined scene, preferably by summing the values in each section and dividing by the number of sections that make up the corresponding scene.

Next, the instant invention will determine the emotions that could potentially be associated with each tag **650.** This will be accomplished by using a data file like the emotion matrix **1100** which is discussed in greater detail in connection with Fig. **11****.** That is, each tag is associated with several categorizations that determine the use of the tag in the process of the instant invention, e.g., the energy level associated with each tag, information about the dominant energy level, and the association with an emotion. So, in this step the instant invention will utilize this information to obtain an emotion value for each tag.

In the next preferred step, the instant invention will look at the length of the section associated with each video tag and use that information to assess the importance/weight of the emotion values. That is, the more times that a tag occurs in a video and the length of time associated with each appearance provide a measure of the tag's importance. Using this sort of information, the importance of each tag will be evaluated and scaled relative to its section length **660**, thereby making sure that longer events get more weight with respect to the music selection than shorter occurrences.

In the next preferred step, the instant invention will collect all of the emotion values assigned to the video **670** and use those values to access the song database In the next preferred step the best fitting songs in the database **680** will be identified based on the match between the video and song database tags. Preferably the instant invention will present some number, e.g., five, of the best fitting songs to the user for selection.

As a last preferred step, the instant invention will then automatically adapt the song to the video length **690.** This can either be done, for example, via the application of a fade out at the end of the song (e.g., a two second fadeout), or a calculated soft fade out at the end of the song at the exact video ending position could be used. Of course, after the song has been so prepared it will be added to the audio track of the video. In some embodiments it might be at a relatively low volume to serve as background music and in other embodiment it might intended to serve as the entire audio content of the video. That choice could be left up to the user.

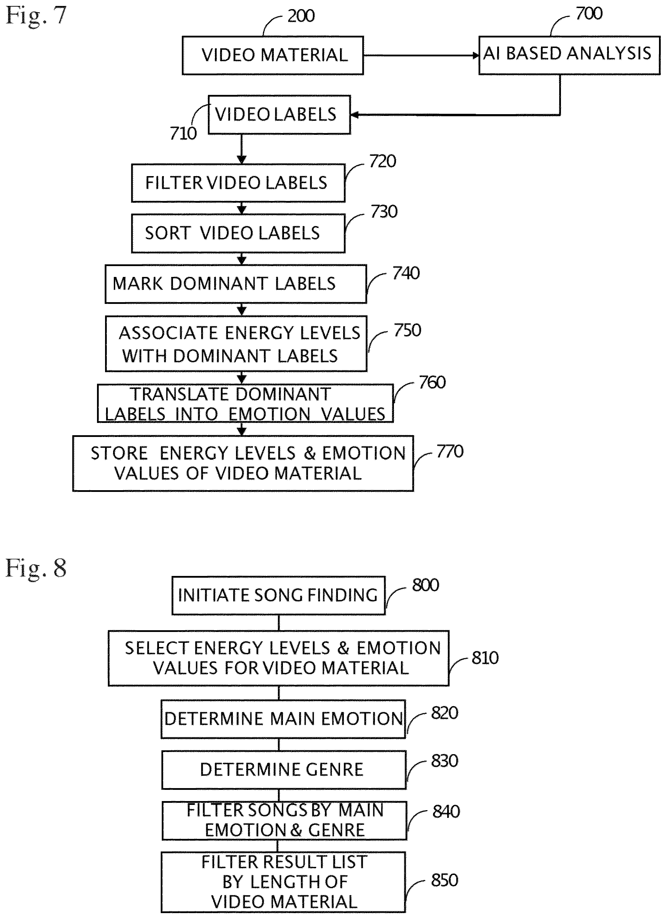

Coming next to Fig. **7**, this figure illustrates an embodiment of the instant invention which incorporates the video analysis data into the emotion matrix. In a first preferred step the user selects the video material **200** for which it is desired to find at least one fitting song. The instant invention then sends this video to an AI based analysis (step **700**) which provides the instant invention with video labels **710** as has been discussed previously, i.e., labels that describe each time frame of the video material with at least one word.

In the next preferred step, the video label list will be filtered to find tags meaningful for the song finding process **720**, i.e., some labels will be marked positive for further usage (e.g., labels like: Adventure, Aerial View, or Architecture). As a next preferred step these labels are then sorted by their occurrence (length and frequency) in the video material **730.**Then dominant labels will be identified **740,** i.e., labels that occur very frequently and./or are associated with longer sections of the video or have been labeled as meaningful in terms of their impact depending on the label.

In the next preferred step, the instant invention will then associate an energy level value with each of these labels **750.** In some embodiments the value can be assigned as numerical value from 1 to 3. Preferably the decision as to what label gets which energy level value is preferably made by the expert system, wherein a selection and assignment approach is provided that realizes the association between energy level and label.

In the next preferred step, the instant invention will translate the dominant labels into emotions using the emotion matrix table **760.** See also Fig. 11 and the associated text. The emotion matrix table **1100** is based on accumulated expert knowledge which means that, in the preferred arrangement, for each label there is an entry in one or more of the columns that are associated with emotions. In the last preferred step, the instant invention will store the generated energy levels and emotion values for the video material **770.**

Turning next to Fig. **8**, this figure depicts the song finding algorithm according to an embodiment of the instant invention. In a first preferred step the user will initiate the song finding process **800**, which is a multi-step filter process that is performed in the song database to find the best fitting song for a section of the video. The instant invention will use the stored energy levels and emotion values for the video material **810.** The emotion value data is then parsed by the instant invention to determine the main emotion value **820**, then based on the main emotion the instant invention will determine the genre **830.**

In the next preferred step, the main emotion value and the determined genre are then utilized in a filtering step wherein the songs in the database are filtered by genre and main emotion **840.** The instant invention will optionally then provide the user with a list of all songs which match the afore mentioned criteria. This list may be then further filtered by comparing the length of the candidate songs with the length of the video **850.**

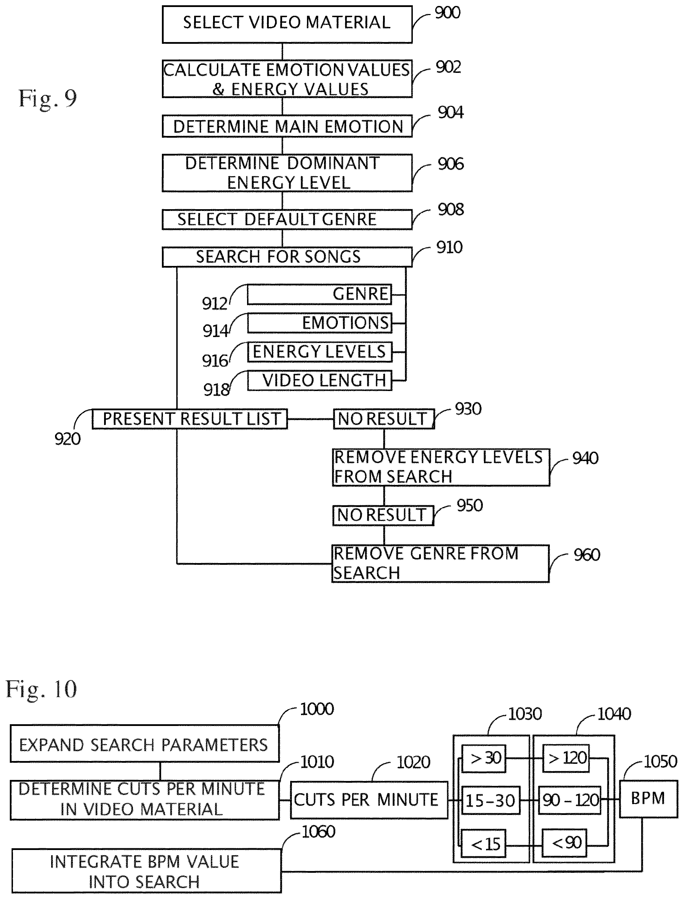

Turning next to Fig. **9**, this figure illustrates a more elaborate approach to finding the best fitting song according to another embodiment. In a first preferred step the user selects the video material **900** for which he or she would like to retrieve the best fitting songs from the audio database.

After the video material has been selected, the instant invention calculates the emotion values and the energy level values **902.** As a next preferred step, the main emotion of the video material will be determined. As described previously, this is usually accomplished by parsing the video label list and matching these values with the entries in the emotion matrix. The number of occurrences of each emotion (perhaps weighted by the proportion of the video that has been assigned this emotion) are tabulated and a main emotion is determined. Often this will be done by choosing the five most frequently occurring emotions and then choosing the most frequent emotion of those five as the main emotion **904.**

In the next preferred step, the dominant energy will be determined **906** in a manner similar to that discussed in the previous step. Additionally, data from the emotion matrix will also be used which will allow the instant invention to determine the association of each section of the video with a dominant energy level, e.g., "aggressive", "energetic" or "calm".

In the next preferred step, the user either selects a preferred genre or the instant invention automatically selects it from an association listing between the main emotion and a list of genres correlating therewith **908.** As a next preferred step, the instant invention will then initiate the search for songs in the audio database **910**, utilizing all of the parameters as search criteria: genre **912**, emotions **914**, energy levels **916** and length of the video **918.** Preferably, the database search results will be provided t to the user in the form of a results list **920** from which a user can select his or her favorite best fitting song. If the initial search does not provide a result or no satisfying result for the user **930**, then the instant invention provides the option to remove the energy levels parameter from the search **940** and search again. If this adapted search also does not provide a result or no satisfying result for the user **950** the instant invention will then remove the genre parameter from the search and re-initiate the search **960** providing the user with a list of at least five best fitting songs from that search.

Turning next to Fig. **10**, this figure depicts an expansion of the song fitting search parameter according to an embodiment which adds a cuts per minute data value as a parameter into the search. In case the user is dissatisfied with the search results based on the run of the algorithm and the previously discussed search criteria did not provide acceptable results either, the instant invention can expand the selection of search parameters **1000**, e.g., by using a parameter such as the cuts per minute **1020** in the video material value which might be translated, in some embodiments, into a beats per minute **1050** search value and in other embodiments a genre search value adaptation for the audio material. This search value is then included in the search **1060** as a parameter. In the case of high cuts per minute, with values over 30, music with a bpm range of 120 or higher would typically be required, which points to the genres of techno, EDM, and dance for example. In case of medium cuts per minute, say between 15 and 30, music with a bpm range of 90 to 120 is desired or probably acceptable, which points to the genres of pop, rock or Hip-hop. In case of slow cuts per minute, under 15, the bpm value of the music should be below 90, which points to genres, like cinematic, ambient or chillout. Items **1030** and **1040** of Fig. **10** illustrate this comparison.

Coming next to Fig. **11**, this figure illustrates a portion of an embodiment of an emotion matrix **1100** for one particular video item after application of analysis and expert engine to the video material. Note that the emotion matrix will be different for each video item, because each video is different, so the video tags will be different as well. One function of the emotion matrix is to provide a translation between the video tags and the emotion of a video scene. The emotion matrix features columns for video tag label **1105**, use **1110**, e-level **1115**, aggressive **1120,** energetic **1125**, calm **1130**, beautiful **1135** and relaxing **1140.** Note that is only an excerpt from the full emotion matrix. There are many more labels and also more emotions that might be associated with a video work. Label **1105** stands for the result of the run-through of the analysis software and stores every video tag that has been selected by the AI software for analysis. The "Use" column **1110** contains either a "1" or "0" and indicates whether the information associated with that particular label is relevant for the search algorithm - where "1" means "yes" and "0" means "no". E-Level **1115** represents the energy level of each label, with the value in this example might varying between 1 and 3.

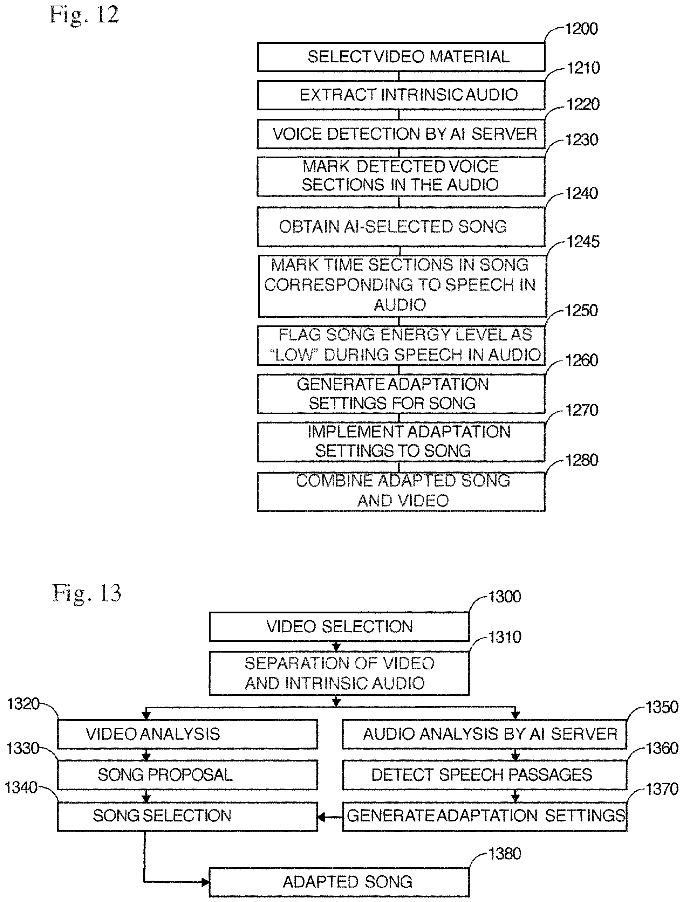

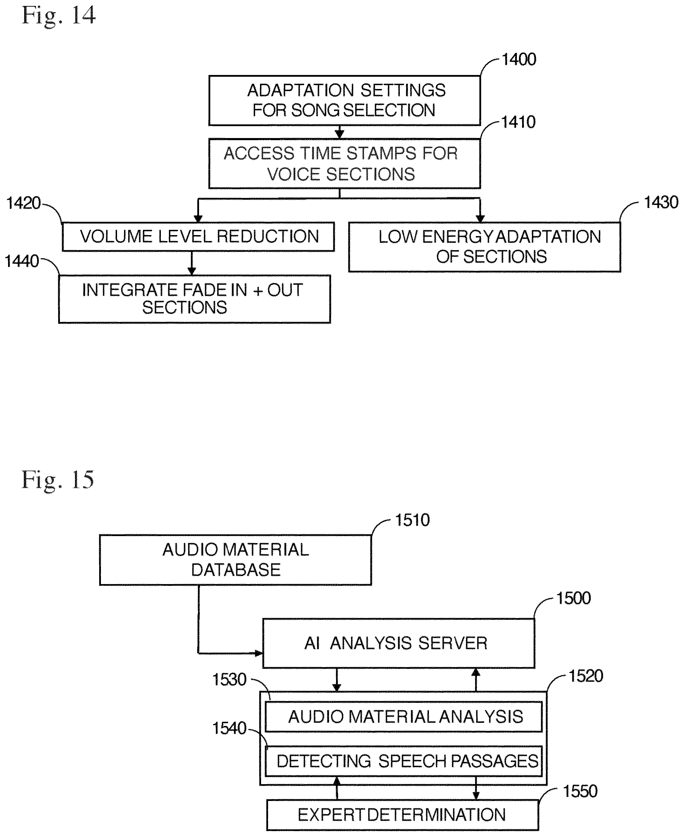

Turning next to Fig. **12**, this figure depicts a high-level summary of a song adaptation algorithm according to one embodiment. This embodiment begins with a preferred first step wherein the user selects the video material **1200** for which the user would like to have the system determine an appropriate accompanying song. As a next preferred step, the instant invention will extract the intrinsic audio of the video material **1210**, wherein each video material contains video and associated audio material that has been recorded simultaneously. In a next preferred step, the instant invention will transfer the extracted intrinsic audio material to an associated AI server that is being a significant part of the embodiment of the instant invention. The functionality and work mechanic of the AI server is being disclosed in connection with Figure **15****.**

In a next preferred step, the AI server will apply a voice detection **1220** method to the extracted audio material so that sections in the intrinsic audio containing voice material **1220** can be identified if speech is present. Fig. **15** and the discussion associated therewith provides one example of how the AI might be trained to detect speech passages in the intrinsic audio.

Start and stop times associated with appearance of voice material in the intrinsic audio will be noted **1230.** The approach of Fig. **12** will need to determine and adappt (or access a previously determined) an AI-selected song **1240** that is suitable to use as an accompaniment to the user's video. Note that for purposes of the instant disclosure, the term "AI-selected song" should be understood to include instances where the AI queries the database as described previously and presents some number of alternative song suggestions to the user who then selects one of them for further processing.

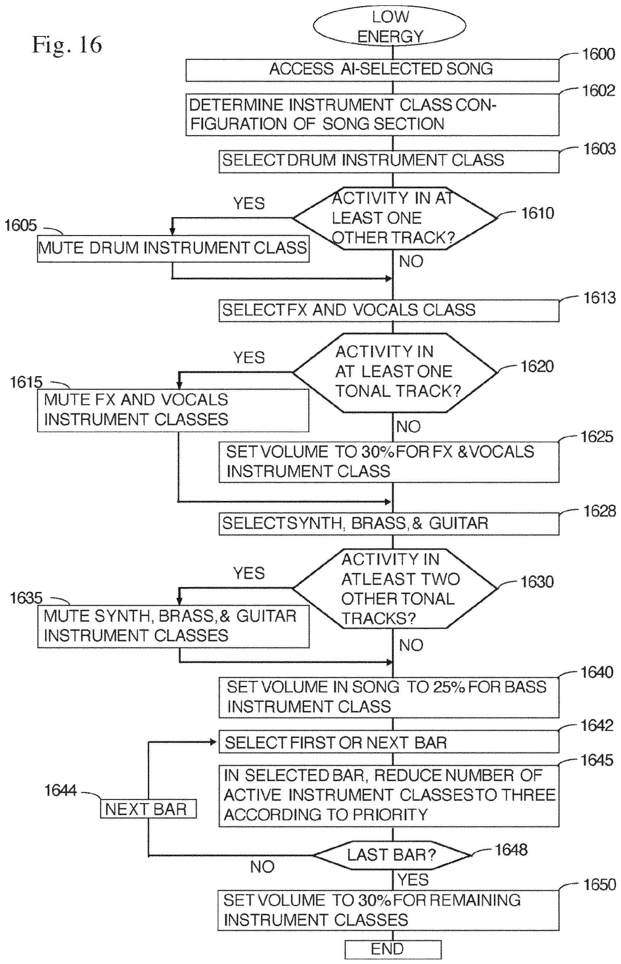

Next, the instant invention will identify the passages in the music that correspond to speech in the intrinsic audio **1245** and flag those intervals for subsequent processing to reduce their volume **1250** using the approach of Fig. **16** so that the speech will be more audible when the selected song is combined with the video. This will be followed by a procedure that processes the identified music ranges that contain speech to generate adaptation settings for the AI- suggested song **1260** which are then in a next preferred step applied to the selected song **1270.** Fig. **14** contains details of how the adaptation setting of step **1260** might be determined according to one embodiment.

Finally, the adapted song will be combined with video work **1280.** This might be done any number of ways but one acceptable approach would be to mix together the adapted song and the intrinsic audio as is conventionally done. In other cases, the adapted song might be added to the video work as an additional channel or channels (e.g., if the adapted song is stereo). Such operations are well known to those of ordinary skill in the video editing arts.

Coming next to Fig. **13**, this figure illustrates an overview of the video processing steps according to an embodiment. The video processing steps operate on a user provided video **1300** and the two branches of Fig. **13** are preferably performed in parallel. Note that steps **1350**, **1360**, and **1370** of this figure contain a high level overview of the process of Fig. **12**, steps **1220** through **1260**, i.e., Fig. **12** explains in greater detail steps **1350-1370** of Fig. **13****.**

The user's video will be separated into intrinsic video and intrinsic audio **1310** components, with both separated media types being provided to associated AI servers for analysis. The video analysis **1320** as disclosed by at least Fig. **6** provides a number of song proposals **1330** to the user from which the user will be able to select a song to accompany the selected video **1340.** The extracted intrinsic audio content is provided to an AI server for audio analysis **1350** which includes detection of and processing the speech/voice passages in the audio material **1360**, if any. Next the instant invention will generate audio adaptation settings **1370** (discussed below) that are associated with the detected speech/voice passages that are then applied to the selected song to generate an adapted song **1380.**

Fig. **14** illustrates a more detailed description of how the adaptation settings **1400** might be obtained in practice. This aspect of the invention **1410** utilizes the previously identified, time stamps that delineate the voice sections in the intrinsic audio from step **1245** and locates them in the AI-selected song. These time stamps can be utilized in two different ways, with the final product of each being provided to the user for final selection.

In one approach within the intervals delineated by the time stamps the instant invention will adapt the energy level of the marked sections **1430** of the AI-selected song as described in connection with Fig. **16****.**

According to another approach the instant invention will utilize volume level reduction values **1420** for the marked sections that reduce the volume of the AI-selected song in where there is speech present by a certain amount, for example -10 dB, while creating the final adapted song. Of course, the amount of reduction in volume will have to be selected based on a comparison of the volume of the intrinsic audio and that that of the selected song but often volume reductions between -5 dB and -15 dB are suitable. This is done so that the music that has been selected by the AI to accompany the video does not overwhelm the vocal information contained within the intrinsic audio.

Another reason this might be done is to create volume changes to use in connection with the fade-in and fade-out sections **1440** of the video. As an example, the volume level of the AI-selected song might be reduced (i.e., faded down) to the level determined above in advance of a marked speech passage, e.g., 1 second before the beginning of the marked speech passage, and then raised back up after the speech passage has ended, e.g., the AI-selected song audio might be ramped back up over a 1 second window following the end of the speech passage. Of course, the length of time over which the song volume is faded down / faded up and its timing can readily be modified to suit the particular character and timing of the intrinsic audio. Those of ordinary skill in the art will understand how this might be done.

Turning next to Fig. **15**, this figure illustrates one possible processing and training methodology of the AI speech analysis server utilized by the instant invention. The songs in the audio material database **1510** are used to train the AI server to recognize speech sections in audio material. The AI analyzes **1520** of the audio material stored in the audio material database **1530** and attempts to identify speech passages **1540.** The results of this analysis are provided to an expert **1550** whose input is then provided as feedback to the AI analysis routine. This sort of feedback would be expected to elevate the quality of the AI analysis server results.

Fig. 16 contains a variation of a low energy adaptation method **1430** usable by the instant invention. As a first step **1600**, the AI-selected song will be accessed which might mean a computer file (or files) is accessed read from storage, e.g., ready from a hard disk, SSD, or memory. Next, the instrument class associated with each track in the song will be determined **1602** which might involve reading the multitrack organization and track identifications from a file and providing the user with a graphical display of the multitrack structure. In some instances, though, the user may be asked to provide the instrument class for each track or be given the option to edit the information stored in the metadata to modify the pre-stored another instrument class. In either case, it is expected that the on-screen representation of the music item will be modified to display the instrument class of each track.

As a next preferred step, the instant invention will select the drum instrument class **1603** and mute the drums instrument class **1605** completely if at least one other instrument class is active at each point in time, i.e., unless at some point all of the tracks except for the drum track are silent (decision item **1610**). If there is no drum track, this embodiment will skip to box **1613.**

Note that the term active in this context means that from a selected time point the instant invention determines if audio content is present in a timeframe extending from, say, 1 to 4 bars thereafter and is capable of being played back in the track of the associated defined instrument classes. Of course, the length of the timeframe / window is something that could be varied depending on the situation and, in some cases, the timeframe could cover the entire initial music work. In that case, assuming again that the timeframe is 1 bar, the decision item **1610** would need to examine each of the three bars separately to determine if there was activity in at least one track. However, if the timeframe were 3 bars, all of tracks 1 to 4 would be considered active since all of them have some audio content in the three bars following the start of the music item. Inactive obviously means the opposite, i.e., that no audio content is being played in a track within the time frame in question.

Continuing with this embodiment, the vocals and FX instrument class will be selected **1613** and be muted **1615** if at least one tonal instrument class is active (decision item 1620). As before, depending on the chosen timeframe length, decision item **1620** may need to step through the selected music work and decide at multiple time points if there is activity in a track and whether or not the FX and/or vocals need to be muted.

If there are no FX or vocal instrument class tracks, the instant approach will skip to step **1628.** The tonal instrument classes are keys, string, synth, brass, bass, and guitar. Note that this list does not necessarily represent an order of preference nor is it a comprehensive list. However, for purposes of the instant application when the term "tonal instrument class" is used this phrase is associated with one of these six instrument classes. This list is just given as an example and represents a selection of names for the instrument classes to clarify the description of an embodiment of the invention. In the event that none of tonal instrument classes is active - the volume value of the vocals and FX instrument class will be set to 30% **1625** of its current value. This volume adaptation percentage is meant to be applied to the absolute volume level that is globally set for the music piece.

In a next preferred step, when tasked with the generation of a low energy version the melody lines of the music piece are modified. That is, the melody instrument classes (e.g., synth, brass, and guitar) will be selected **1628** and successive timeframes processed in such a way that these melody instrument classes are muted **1635** completely if at least two more instrument classes (which do not necessarily need to be melody instrument classes) remain active in a timeframe (decision item **1630**). Note that if there is not activity in at least two other tonal tracks, the synth, brass, and guitar instrument classes will be treated as a "remaining instrument class" in connection with box **1650** below. Again, this decision item may need to be evaluated for multiple windows / timeframes within the initial music work.

For the bass instrument class, the initial volume value will in some embodiments be reduced to 25% **1640** of its original value for the generation of the low energy version. That being said, volume reductions between about 20% and 30% might be useful in some scenarios.

Continuing with the present embodiment, after these five processing steps the number of active instrument classes within each bar, each music piece comprising a specific bar setting - for example 4 bars - will be analysed and for the generation of the low energy version the number of active instrument classes will be reduced to a maximum of three (steps **1642, 1645, 1648,** and **1644**) utilizing a priority list **1645** until the desired number is reached. In the current embodiment, the priority list is as follows: vocals, FX, synth, brass, strings, drums, percussion, with percussion being the lowest in priority to keep, i.e., the first to be muted, and vocals being the highest in priority to keep and last to be muted.

In a last step, after all of the bars have been processed (decision item **1648**) for the generation of a low energy version, the instant embodiment determines the volume level of each remaining instrument class and adjusts the volume level of these instrument classes to 30% **1650,** or more generally between about 25% and 35% of the original volume. By "remaining instrument classes" is meant any tracks in the initial music work which have not been muted or had their initial volumes adjusted. Note that there may or may not be any such tracks remaining depending on the number of tracks in the initial music work and how the instrument classes have been treated.

In some embodiments all of the above-mentioned steps are implemented sequentially on the selected music piece section with the user given a chance to review the change in the music piece section at, for example, points **1613, 1628, 1640,** and **1650.** That is, the user will be able to play the initial version as modified by the muting (if any) and/or volume adjustments to that point. Alternatively, the entire method of Fig. **16** might be implemented in its entirety and the user given the option to review the final product after step **1650.**

### CONCLUSIONS

Of course, many modifications and extensions could be made to the instant invention by those of ordinary skill in the art. For example, in one preferred embodiment if the song in the database is stored in an editable project format, the energy levels for each video scene can be used to adapt the musical energy according to the energy level of the video scene.

It should be noted and understood that the invention is described herein with a certain degree of particularity. However, the invention is not limited to the embodiment(s) set for herein for purposes of exemplifications, but is limited only by the scope of the attached claims.

It is to be understood that the terms "including", "comprising", "consisting" and grammatical variants thereof do not preclude the addition of one or more components, features, steps, or integers or groups thereof and that the terms are to be construed as specifying components, features, steps or integers.

The singular shall include the plural and vice versa unless the context in which the term appears indicates otherwise.

If the specification or claims refer to "an additional" element, that does not preclude there being more than one of the additional elements.

It is to be understood that where the claims or specification refer to "a" or "an" element, such reference is not to be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

For purposes of the instant disclosure, the term "at least" followed by a number is used herein to denote the start of a range beginning with that number (which may be a range having an upper limit or no upper limit, depending on the variable being defined). For example, "at least 1" means 1 or more than 1. The term "at most" followed by a number is used herein to denote the end of a range ending with that number (which may be a range having 1 or 0 as its lower limit, or a range having no lower limit, depending upon the variable being defined). For example, "at most 4" means 4 or less than 4, and "at most 40%" means 40% or less than 40%. Terms of approximation (e.g., "about", "substantially", "approximately", etc.) should be interpreted according to their ordinary and customary meanings as used in the associated art unless indicated otherwise. Absent a specific definition and absent ordinary and customary usage in the associated art, such terms should be interpreted to be ± 10% of the base value.

When, in this document, a range is given as "(a first number) to (a second number)" or "(a first number) - (a second number)", this means a range whose lower limit is the first number and whose upper limit is the second number. For example, 25 to 100 should be interpreted to mean a range whose lower limit is 25 and whose upper limit is 100. Additionally, it should be noted that where a range is given, every possible subrange or interval within that range is also specifically intended unless the context indicates to the contrary. For example, if the specification indicates a range of 25 to 100 such range is also intended to include subranges such as 26 -100, 27-100, etc., 25-99, 25-98, etc., as well as any other possible combination of lower and upper values within the stated range, e.g., 33-47, 60-97, 41-45, 28-96, etc. Note that integer range values have been used in this paragraph for purposes of illustration only and decimal and fractional values (e.g., 46.7 - 91.3) should also be understood to be intended as possible subrange endpoints unless specifically excluded.

It should be noted that where reference is made herein to a method comprising two or more defined steps, the defined steps can be carried out in any order or simultaneously (except where context excludes that possibility), and the method can also include one or more other steps which are carried out before any of the defined steps, between two of the defined steps, or after all of the defined steps (except where context excludes that possibility).

Further, it should be noted that terms of approximation (e.g., "about", "substantially", "approximately", etc.) are to be interpreted according to their ordinary and customary meanings as used in the associated art unless indicated otherwise herein. Absent a specific definition within this disclosure, and absent ordinary and customary usage in the associated art, such terms should be interpreted to be plus or minus 10% of the base value.

Still further, additional aspects of the instant invention may be found in one or more appendices attached hereto and/or filed herewith, the disclosures of which are incorporated herein by reference as if fully set out at this point.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those of ordinary skill in the art, without departing from the spirit of the inventive concept the scope of which is to be determined by the following claims.

## Claims

1. A method of automatically matching a song to a video work, said video work having a video component and an intrinsic audio component associated therewith, comprising the steps of:
(a) extracting said intrinsic video from said video work;
(b) identifying all sections of said intrinsic audio that contain speech;
(c) identifying a speech start time and a speech stop time of each of said sections of said intrinsic audio that contain speech, thereby obtaining at least one speech start time and speech stop time associated with said intrinsic audio;
(d) obtaining an Al-selected song suitable for use with said video work;
(e) using each of said at least one speech start times and speech said stop times to identify a corresponding a music start time and a music stop time in said AI-selected song;
(f) generating an adaptation setting using each of said at least one music start times and music stop times, thereby obtaining at least one adaptation setting;
(g) applying each of said at least one adaptation settings to said Al-selected song, thereby obtaining an adapted song;
(h) adding said adapted song to said video work to form a combined video work, thereby matching said adapted song to said video work; and
(i) performing at least a portion of said combined video work for a user.

2. The method according to claim 1, wherein the step of applying each of said at least one adaptation settings to said Al-selected song, said Al-selected having an original volume, comprises the steps of:
(g1) for each of said at least one music start times and music stop times, either
(i) reducing said original volume of said Al-selected song between said music start time and said music stop time by a predetermined amount, or
(ii) reducing an energy level of said Al-selected song between said music start time and said music stop time,
thereby obtaining said adapted song.

3. The method according to claim 3, wherein said predetermined amount is between -5 dB and -15 dB.

4. The method according to claim 2, wherein the step of reducing said original volume of said Al-selected song between said music start time and said music stop time by a predetermined amount, further comprises:
(i1) beginning at least one second before said music start time, ramping down said original volume of said AI-selected song by said predetermined amount,
(i2) beginning one second after said music stop time ramping up said volume of said Al-selected song to said original volume.
